# EUROPEAN PATENT APPLICATION

(11) **EP 4 847 280 A1**
(43) Date of publication of application: **02.12.2026**
(21) Application number: 25899866.5
(22) Date of filing: 04.08.2025
(51) Int. Cl.: B60G 15/06

(54) **REAR SUSPENSION SYSTEM AND VEHICLE**

(30) Priority: 04.12.2024 CN 202422986749 U
(71) Applicant: Segway Technology Co., Ltd., Jiangsu 213000 (CN)
(72) Inventor: YUAN, Zhangping, hangzhou, Jiangsu 213000 (CN)
(74) Representative: Manna, Sara
(86) International application number: PCT/CN2025/112571
(87) International publication number: WO 2026/118505

(57) **Abstract**

A rear suspension system and a vehicle. The rear suspension system comprises a rear swing arm (1), an upper control rod (2), a toe link (3) and a lower control rod (4), wherein the rear swing arm (1) extends along the X axis of the vehicle, and the upper control rod (2), the toe link (3) and the lower control rod (4) extend along the Y axis of the vehicle; in the Z axis direction of the vehicle, the toe link (3) is located between the upper control rod (2) and the lower control rod (4); and an included angle E formed by the X axis and the extension direction of the projection of the rear swing arm (1) in a vertical plane perpendicular to the Y axis is -5 degrees to 5 degrees. The rear suspension system realizes the optimal design of the angles and orientations of the rear swing arm (1) and the corresponding control rods, and also defines the arrangement of the mounting points of the control rods and the mounting angle, thereby improving the stability of the vehicle when traveling at a high speed.

## Description

### CROSS-REFERENCE TO RELATED APPLICATION

The present disclosure claims priority to and benefit of Chinese Patent Application No. 202422986749.X, filed on December 5, 2024, the entire contents of which are incorporated into the present disclosure herein by reference.

### FIELD

Embodiments of the present disclosure relate to the field of suspensions, and in particular to a rear suspension system and a vehicle.

### BACKGROUND

An all-terrain vehicle is a vehicle capable of traveling on any terrain. Most existing all-terrain vehicles have a rear suspension with a multi-control-link structure, and design of the rear suspension mainly focuses on compatibility of overall vehicle handling performance and comfort performance, which results in suboptimal overall stability of existing all-terrain vehicles during high-speed driving.

### SUMMARY

The present disclosure is intended to solve one of the technical problems in the related art to at least some extent.

Accordingly, embodiments of the present disclosure provide a rear suspension system. The rear suspension system achieves an optimized design of angles and orientations of a rear swing arm and corresponding control arms, and also defines arrangement and installation angles of mounting points of each control arm, thereby improving the stability of the vehicle during high-speed driving.

Embodiments of the present disclosure also provide a vehicle including the above-mentioned rear suspension system.

A rear suspension system according to embodiments of the present disclosure includes a rear swing arm, an upper control arm, a toe link, and a lower control arm; the rear swing arm is configured to extend along an X-axis of a vehicle; the upper control arm, the toe link, and the lower control arm are configured to extend along a Y-axis of the vehicle; and along a direction of a Z-axis of the vehicle, the toe link is configured to be located between the upper control arm and the lower control arm; and
an included angle, denoted as E, formed between an extending direction of a projection of the rear swing arm in a vertical plane perpendicular to the Y-axis and the X-axis ranges from -5° to 5°.

In some embodiments, an included angle, denoted as D, formed between an extending direction of a projection of the rear swing arm in a horizontal plane and the X-axis ranges from 4° to 10°.

In some embodiments, the X-axis, the Y-axis, and the Z-axis form a coordinate system, an origin of the coordinate system is located at a midpoint of a line connecting wheel centers of two rear wheels of the vehicle, and an end of the rear swing arm configured to face a front side of the vehicle forms a front point, in which
a distance, denoted as A, between the front point and the X-axis along a direction of the Y-axis ranges from 400mm to 520mm; and/or
a distance, denoted as B, between the front point and the Y-axis along a direction of the X-axis ranges from 1100mm to 1200mm; and/or
a distance, denoted as C, between the front point and a plane where the X-axis and the Y-axis are located ranges from -30mm to 70mm.

A rear suspension system according to the embodiments of the present disclosure includes a rear swing arm, an upper control arm, a toe link, and a lower control arm; the rear swing arm is configured to extend along an X-axis of a vehicle; the upper control arm, the toe link, and the lower control arm are configured to extend along a Y-axis of the vehicle; and along a direction of a Z-axis of the vehicle, the toe link is configured to be located between the upper control arm and the lower control arm; and
an included angle, denoted as E1, formed between an extending direction of a projection of the upper control arm in a vertical plane perpendicular to the Y-axis and the Z-axis ranges from 40° to 50°.

In some embodiments, an included angle, denoted as D1, formed between an extending direction of a projection of the upper control arm in a horizontal plane and the Y-axis ranges from 8° to 16°.

In some embodiments, the X-axis, the Y-axis, and the Z-axis form a coordinate system, an origin of the coordinate system is located at a midpoint of a line connecting wheel centers of two rear wheels of the vehicle, and an end of the upper control arm configured to face an inner side of the vehicle forms a first inner point, in which
a distance, denoted as A1, between the first inner point and the X-axis along a direction of the Y-axis ranges from 50mm to 70mm; and/or
a distance, denoted as B1, between the first inner point and the Y-axis along a direction of the X-axis ranges from -30mm to 30mm; and/or
a distance, denoted as C1, between the first inner point and a plane where the X-axis and the Y-axis are located ranges from 500mm to 600mm.

In some embodiments, an end of the upper control arm configured to face an outer side of the vehicle forms a first outer point, in which
a distance, denoted as A2, between the first outer point and the X-axis along the direction of the Y-axis ranges from 650mm to 700mm; and/or
a distance, denoted as B2, between the first outer point and the Y-axis along the direction of the X-axis ranges from 80mm to 140mm; and/or
a distance, denoted as C2, between the first outer point and the plane where the X-axis and the Y-axis are located ranges from 400mm to 460mm.

A rear suspension system according to the embodiments of the present disclosure includes a rear swing arm, an upper control arm, a toe link, and a lower control arm; the rear swing arm is configured to extend along an X-axis of a vehicle; the upper control arm, the toe link, and the lower control arm are configured to extend along a Y-axis of the vehicle; and along a direction of a Z-axis of the vehicle, the toe link is configured to be located between the upper control arm and the lower control arm; and
an included angle, denoted as E2, formed between an extending direction of a projection of the toe link in a vertical plane perpendicular to the Y-axis and the Z-axis ranges from 20° to 30°.

In some embodiments, an included angle, denoted as D2, formed between an extending direction of a projection of the toe link in a horizontal plane and the Y-axis ranges from 0° to 8°.

In some embodiments, the X-axis, the Y-axis, and the Z-axis form a coordinate system, an origin of the coordinate system is located at a midpoint of a line connecting wheel centers of two rear wheels of the vehicle, and an end of the toe link configured to face an inner side of the vehicle forms a second inner point, in which
a distance, denoted as A3, between the second inner point and the X-axis along a direction of the Y-axis ranges from 30mm to 50mm; and/or
a distance, denoted as B3, between the second inner point and the Y-axis along a direction of the X-axis ranges from 150mm to 210mm; and/or
a distance, denoted as C3, between the second inner point and a plane where the X-axis and the Y-axis are located ranges from 80mm to 140mm.

An end of the toe link configured to face an outer side of the vehicle forms a second outer point, in which
a distance, denoted as A4, between the second outer point and the X-axis along the direction of the Y-axis ranges from 740mm to 800mm; and/or
a distance, denoted as B4, between the second outer point and the Y-axis along the direction of the X-axis ranges from 100mm to 140mm; and/or
a distance, denoted as C4, between the second outer point and the plane where the X-axis and the Y-axis are located ranges from -20mm to 20mm.

A rear suspension system according to the embodiments of the present disclosure includes a rear swing arm, an upper control arm, a toe link, and a lower control arm; the rear swing arm is configured to extend along an X-axis of a vehicle; the upper control arm, the toe link, and the lower control arm are configured to extend along a Y-axis of the vehicle; and along a direction of a Z-axis of the vehicle, the toe link is configured to be located between the upper control arm and the lower control arm; and
an included angle E3 formed between an extending direction of a projection of the lower control arm in a vertical plane perpendicular to the Y-axis and the Z-axis ranges from 35° to 45°.

In some embodiments, an included angle, denoted as D3, formed between an extending direction of a projection of the lower control arm in a horizontal plane and the Y-axis ranges from 4° to 12°.

In some embodiments, the X-axis, the Y-axis, and the Z-axis form a coordinate system, an origin of the coordinate system is located at a midpoint of a line connecting wheel centers of two rear wheels of the vehicle, and an end of the lower control arm configured to face an inner side of the vehicle forms a third inner point, in which
a distance, denoted as A5, between the third inner point and the X-axis along a direction of the Y-axis ranges from 80mm to 100mm; and/or
a distance, denoted as B5, between the third inner point and the Y-axis along a direction of the X-axis ranges from 150mm to 190mm; and/or
a distance, denoted as C5, between the third inner point and a plane where the X-axis and the Y-axis are located ranges from -10mm to 15mm.

An end of the lower control arm configured to face an outer side of the vehicle forms a third outer point, in which
a distance, denoted as A6, between the third outer point and the X-axis along the direction of the Y-axis ranges from 750mm to 790mm; and/or
a distance, denoted as B6, between the third outer point and the Y-axis along the direction of the X-axis ranges from 50mm to 70mm; and/or
a distance, denoted as C6, between the third outer point and the plane where the X-axis and the Y-axis are located ranges from 100mm to 140mm.

A vehicle according to the embodiments of the present disclosure includes the rear suspension system according to any of the above embodiments.

In some embodiments, the vehicle further includes:
a frame and a damper, in which the upper control arm, the toe link, the lower control arm, and the damper are each connected between the frame and the rear swing arm;
a stabilizer bar and a connecting rod, in which the stabilizer bar is connected to the frame, and the connecting rod is connected between the stabilizer bar and the rear swing arm; and
a rear wheel, in which the rear swing arm is connected to the rear wheel.

The beneficial effects are as follows.

The rear suspension system according to the embodiments of the present disclosure and the vehicle including the rear suspension system achieve an optimized design of angles and orientations of the rear swing arm and the corresponding control arms, and also define arrangement and installation angles of the mounting points of each control arm, thereby improving the stability of the vehicle during high-speed driving.

### BRIEF DESCRIPTION OF THE DRAWINGS

FIG. 1 is a perspective view of a rear suspension system according to an embodiment of the present disclosure.
FIG. 2 is a left view of a rear suspension system according to an embodiment of the present disclosure.
FIG. 3 is a top view of a rear suspension system according to an embodiment of the present disclosure.
FIG. 4 is a rear view of a rear suspension system according to an embodiment of the present disclosure.
FIG. 5 is a schematic view of a rear half portion of a vehicle according to an embodiment of the present disclosure.

Reference signs:
1 rear swing arm; 11 front point; 2 upper control arm; 21 first inner point; 22 first outer point; 3 toe link; 31 second inner point; 32 second outer point; 4 lower control arm; 41 third inner point; 42 third outer point; 5 vehicle frame; 6 damper; 7 stabilizer bar; 8 connecting rod; 9 rear wheel.

### DETAILED DESCRIPTION

Embodiments of the present disclosure are described in detail below, examples of which are shown in the accompanying drawings. The following embodiments described with reference to the accompanying drawing are illustrative. It should be understood that the embodiments described are intended to explain the present disclosure, but not to limit the present disclosure. In the description of the present disclosure, it should be understood that the orientation or position relationship indicated by the terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present disclosure and simplifying the description, and does not indicate or imply that the referred device or element must have a specific orientation, and be constructed and operated in a specific orientation, so it cannot be understood as a limitation of the present disclosure.

It should be noted that in the subsequent embodiments, an X-axis is a central axis extending along a front-rear direction of a vehicle, a Y-axis may be an axis defined by wheel centers of two rear wheels of the vehicle, and a Z-axis is an axis passing through an intersection point of the X-axis and the Y-axis and extending along a height direction of the vehicle. The X-axis, the Y-axis, and the Z-axis together form a three-dimensional rectangular coordinate system, and the intersection point of the three axes forms an origin of the three-dimensional rectangular coordinate system.

A rear suspension system according to an embodiment of the present disclosure is described below.

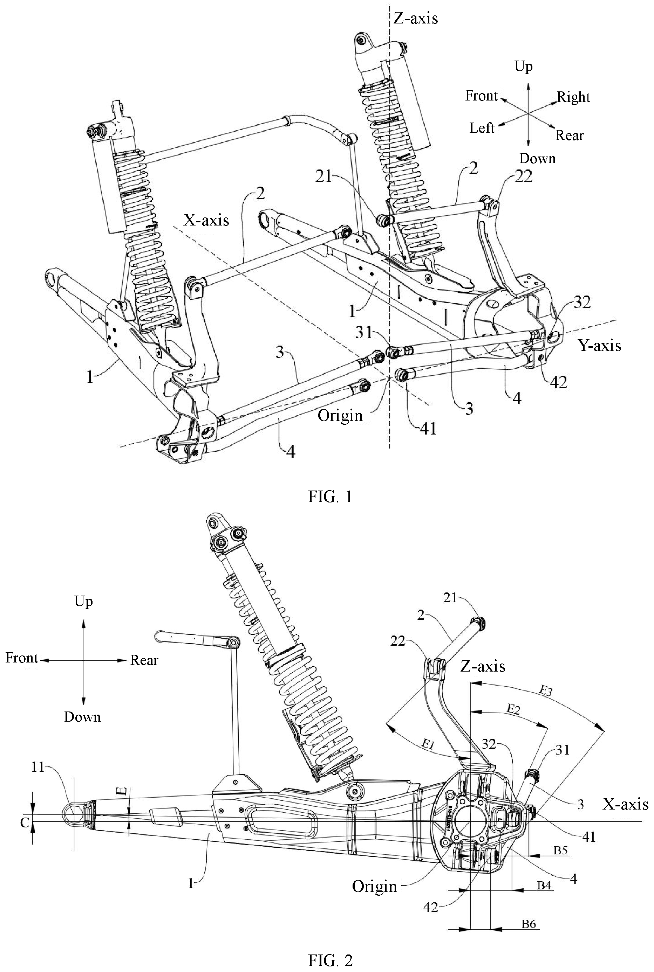

As shown in FIG. 1, the rear suspension system according to the embodiment of the present disclosure includes a rear swing arm 1, an upper control arm 2, a toe link 3, and a lower control arm 4. The rear swing arm 1 is configured to extend along an X-axis of a vehicle. The upper control arm 2, the toe link 3, and the lower control arm 4 are configured to extend along a Y-axis of the vehicle, and along a direction of the Z-axis of the vehicle, the toe link 3 is configured to be located between the upper control arm 2 and the lower control arm 4.

For example, two rear swing arms 1, two upper control arms 2, two toe links 3, and two lower control arms 4 may be provided. One rear swing arm 1, one upper control arm 2, one toe link 3, and one lower control arm 4 form a set of suspension structures, and thus two sets of suspension structures of the rear suspension system are provided and substantially symmetrically arranged in a left-right direction.

Taking the set of suspension structure of the two sets of suspension structures on a right side as an example, the upper control arm 2 may be arranged above the rear swing arm 1. The upper control arm 2 may generally extend in the left-right direction. An end of the upper control arm 2 may be connected to the rear swing arm 1 via a link extending upward from the rear swing arm 1, specifically via a spherical bearing or the like.

Each of the toe link 3 and the lower control arm 4 may be arranged at a rear side of the rear swing arm 1. Each of the toe link 3 and the lower control arm 4 generally extends in the left-right direction, and each of an end of the toe link 3 and an end of the lower control arm 4 may be connected to a rear end of the rear swing arm 1 via a spherical bearing. In an up-down direction, the toe link 3 may be located between the upper control arm 2 and the lower control arm 4, and the toe link 3 is arranged closer to the lower control arm 4 compared with the upper control arm 2.

An included angle, denoted as E, formed between an extending direction of a projection of the rear swing arm 1 in a vertical plane perpendicular to the Y-axis and the X-axis ranges from -5° to 5°. For example, as shown in FIG. 2, the vertical plane perpendicular to the Y-axis is a vertical plane perpendicular to the left-right direction. The projection of the rear swing arm 1 in this vertical plane generally extends from upper front to lower rear, and the included angle E formed between the projection of the rear swing arm 1 in this vertical plane and the X-axis may specifically be -5°, -4°, -3°, -2°, -1°, 0°, 1°, 2°, 3°, 4°, 5°, etc., thus achieving an optimized design of arrangement azimuth angle of the rear swing arm 1, and improving stability of the vehicle during high-speed driving.

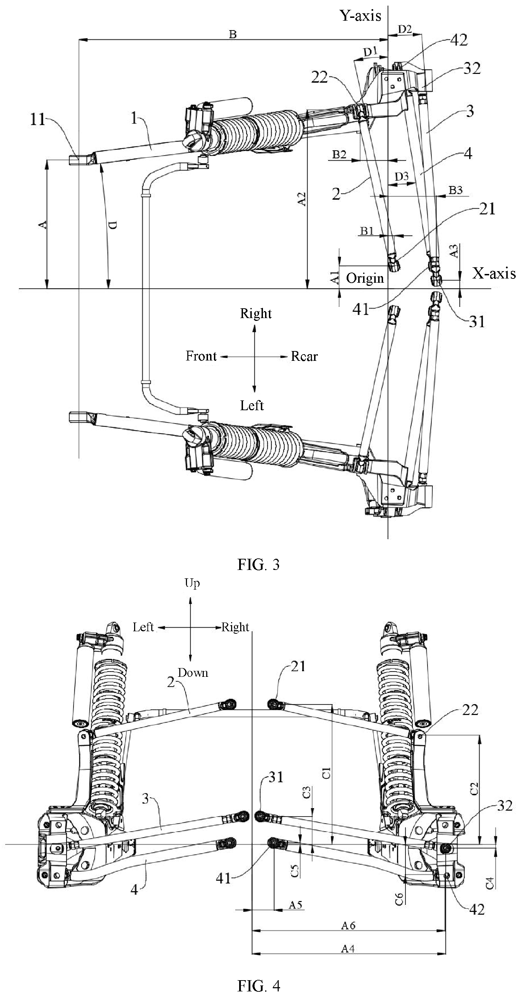

In some embodiments, an included angle, denoted as D, formed between an extending direction of a projection of the rear swing arm 1 in a horizontal plane and the X-axis ranges from 4° to 10°. For example, as shown in FIG. 3, the horizontal plane may be regarded as a plane perpendicular to the Z-axis. The included angle D formed between the projection of the rear swing arm 1 in this horizontal plane and the X-axis may be 4°, 5°, 6°, 7°, 8°, 9°, 10°, etc., thus further achieving the optimized design of the arrangement azimuth inclination of the rear swing arm 1, and further improving the driving stability of the vehicle.

In some embodiments, as shown in FIGS. 1 to 3, the X-axis, the Y-axis, and the Z-axis form a coordinate system, an origin of the coordinate system is located at a midpoint of a line connecting wheel centers of two rear wheels 9 of the vehicle, and a front end of the rear swing arm 1 configured to face a front side of the vehicle forms a front point 11.

A distance, denoted as A, between the front point 11 and the X-axis along a direction of the Y-axis ranges from 400mm to 520mm. For example, as shown in FIG. 3, the distance A may be regarded as a distance between a projection of the front point 11 on a horizontal plane passing through the origin of the coordinate system and the X-axis. The distance A may specifically be 400mm, 450mm, 480mm, 500mm, 510mm, 520mm, etc. Thus, a position of the front end of the rear swing arm 1 in the left-right direction is defined, thus further improving the driving stability of the vehicle.

In some embodiments, a distance, denoted as B, between the front point 11 and the Y-axis along the direction of the X-axis ranges from 1100mm to 1200mm. For example, as shown in FIG. 3, the distance B may be regarded as a distance between a projection of the front point 11 on the horizontal plane passing through the origin of the coordinate system and the Y-axis. The distance B may specifically be 1100mm, 1110mm, 1120mm, 1130mm, 1140mm, 1150mm, 1160mm, 1170mm, 1180mm, 1190mm, 1200mm, etc. Thus, a position of the front end of the rear swing arm 1 in a front-rear direction is defined, thus further improving the driving stability of the vehicle.

In some embodiments, a distance, denoted as C, between the front point 11 and a plane where the X-axis and the Y-axis are located ranges from -30mm to 70mm. For example, the plane where the X-axis and the Y-axis are located may be regarded as the horizontal plane passing through the origin of the coordinate system. A distance between the front point 11 and this horizontal plane is the distance C. The distance C may specifically be -30mm, -20mm, -10mm, 0mm, 10mm, 20mm, 30mm, 40mm, 50mm, 60mm, 70mm, etc. Thus, a position of the front end of the rear swing arm 1 in the up-down direction is defined, thus further improving the driving stability of the vehicle.

A rear suspension system according to another embodiment of the present disclosure is described below.

The rear suspension system according to the embodiment of the present disclosure includes a rear swing arm 1, an upper control arm 2, a toe link 3, and a lower control arm 4. The rear swing arm 1 extends along an X-axis of a vehicle. The upper control arm 2, the toe link 3, and the lower control arm 4 extend along a Y-axis of the vehicle, and along a direction of a Z-axis of the vehicle, the toe link 3 is located between the upper control arm 2 and the lower control arm 4.

The specific arrangement positions and orientations of the rear swing arm 1, the upper control arm 2, the toe link 3, and the lower control arm 4 may be as described in the above embodiments, which will not be repeated here.

An included angle, denoted as E1, formed between an extending direction of a projection of the upper control arm 2 in a vertical plane perpendicular to the Y-axis and a Z-axis ranges from 40° to 50°. For example, as shown in FIG. 2, the included angle E1 may specifically be 40°, 41°, 42°, 45°, 47°, 49°, 50°, etc. Thus, a spatial orientation of the upper control arm 2 in an up-down direction is defined, thus further improving the driving stability of the vehicle.

In some embodiments, an included angle, denoted as D1, formed between an extending direction of a projection of the upper control arm 2 in a horizontal plane and the Y-axis ranges from 8° to 16°. For example, as shown in FIG. 3, the included angle D1 may specifically be 8°, 9°, 10°, 11°, 12°, 13°, 14°, 15°, 16°, etc. Thus, the spatial orientation of the upper control arm 2 in a left-right direction is defined, thus further improving the driving stability of the vehicle.

In some embodiments, the X-axis, the Y-axis, and the Z-axis form a coordinate system, an origin of the coordinate system is located at a midpoint of a line connecting wheel centers of two rear wheels 9 of the vehicle, and an inner end of the upper control arm 2 configured to face an inner side of the vehicle forms a first inner point 21. For example, as shown in FIGS. 1 to 4, taking the upper control arm 2 at a right side as an example, the first inner point 21 may be a left end of the upper control arm 2.

A distance, denoted as A1, between the first inner point 21 and the X-axis along a direction of the Y-axis ranges from 50mm to 70mm. For example, as shown in FIG. 3, the distance A1 may specifically be 50mm, 52mm, 54mm, 56mm, 57mm, 58mm, 59mm, 70mm, etc. Thus, a position of the inner end of the upper control arm 2 in the left-right direction is defined, thus further improving the driving stability of the vehicle.

In some embodiments, a distance, denoted as B1, between the first inner point 21 and the Y-axis along a direction of the X-axis ranges from -30mm to 30mm. For example, as shown in FIG. 3, the distance B1 may specifically be -30mm, -20mm, -10mm, 0mm, 10mm, 20mm, 30mm, etc. Thus, a position of the inner end of the upper control arm 2 in a front-rear direction is defined, thus further improving the driving stability of the vehicle.

In some embodiments, a distance, denoted as C1, between the first inner point 21 and a plane where the X-axis and the Y-axis are located ranges from 500mm to 600mm. For example, as shown in FIG. 4, the distance C1 may be 500mm, 510mm, 520mm, 530mm, 540mm, 550mm, 560mm, 570mm, 580mm, 590mm, 600mm, etc. Thus, a position of the inner end of the upper control arm 2 in the up-down direction is defined, thus further improving the driving stability of the vehicle.

In some embodiments, an outer end of the upper control arm 2 configured to face an outer side of the vehicle forms a first outer point 22. For example, taking the upper control arm 2 at the right side as an example, the first outer point 22 may be a right end of the upper control arm 2.

A distance, denoted as A2, between the first outer point 22 and the X-axis along the direction of the Y-axis ranges from 650mm to 700mm. For example, as shown in FIG. 3, the distance A2 may specifically be 650mm, 660mm, 670mm, 680mm, 690mm, 700mm, etc. Thus, a position of the outer end of the upper control arm 2 in the left-right direction is defined, thus further improving the driving stability of the vehicle.

In some embodiments, a distance, denoted as B2, between the first outer point 22 and the Y-axis along the direction of the X-axis ranges from 80mm to 140mm. For example, as shown in FIG. 3, the distance B2 may specifically be 80mm, 85mm, 90mm, 95mm, 100mm, 105mm, 110mm, 115mm, 120mm, 125mm, 130mm, 135mm, 140mm, etc. Thus, a position of the outer end of the upper control arm 2 in the front-rear direction is defined, thus further improving the driving stability of the vehicle.

In some embodiments, a distance, denoted as C2, between the first outer point 22 and the plane where the X-axis and the Y-axis are located ranges from 400mm to 460mm. For example, as shown in FIG. 4, the distance C2 may specifically be 400mm, 410mm, 420mm, 430mm, 440mm, 450mm, 460mm, etc. Thus, a position of the outer end of the upper control arm 2 in the up-down direction is defined, thus further improving the driving stability of the vehicle.

A rear suspension system according to yet another embodiment of the present disclosure is described below.

The rear suspension system according to the embodiment of the present disclosure includes a rear swing arm 1, an upper control arm 2, a toe link 3, and a lower control arm 4. The rear swing arm 1 extends along an X-axis of a vehicle. The upper control arm 2, the toe link 3, and the lower control arm 4 extend along a Y-axis of the vehicle, and along a direction of a Z-axis of the vehicle, the toe link 3 is located between the upper control arm 2 and the lower control arm 4.

The specific arrangement positions and orientations of the rear swing arm 1, the upper control arm 2, the toe link 3, and the lower control arm 4 may be as described in the above embodiments, which will not be repeated here.

An included angle, denoted as E2, formed between an extending direction of a projection of the toe link 3 in a vertical plane perpendicular to the Y-axis and the Z-axis ranges from 20° to 30°. For example, as shown in FIG. 2, the included angle E2 may specifically be 20°, 21°, 22°, 25°, 27°, 29°, 30°, etc. Thus, a spatial orientation of the toe link 3 in an up-down direction is defined, thus further improving the driving stability of the vehicle.

In some embodiments, an included angle, denoted as D2, formed between an extending direction of a projection of the toe link 3 in a horizontal plane and the Y-axis ranges from 0° to 8°. For example, as shown in FIG. 3, the included angle D2 may specifically be 0°, 1°, 2°, 3°, 5°, 6°, 7°, 8°, etc. Thus, a spatial orientation of the toe link 3 in a left-right direction is defined, thus further improving the driving stability of the vehicle.

In some embodiments, the X-axis, the Y-axis, and the Z-axis form a coordinate system, an origin of the coordinate system is located at a midpoint of a line connecting wheel centers of two rear wheels 9 of the vehicle, and an inner end of the toe link 3 configured to face an inner side of the vehicle forms a second inner point 31. For example, as shown in FIGS. 1 to 4, taking the toe link 3 at a right side as an example, the second inner point 31 may be a left end of the toe link 3.

A distance, denoted as A3, between the second inner point 31 and the X-axis along a direction of the Y-axis ranges from 30mm to 50mm. As shown in FIG. 3, the distance A3 may specifically be 30mm, 32mm, 34mm, 36mm, 37mm, 38mm, 39mm, 40mm, 42mm, 45mm, 48mm, 49mm, 50mm, etc. Thus, a position of the inner end of the toe link 3 in the left-right direction is defined, thus further improving the driving stability of the vehicle.

In some embodiments, a distance, denoted as B3, between the second inner point 31 and the Y-axis along a direction of the X-axis ranges from 150mm to 210mm. For example, as shown in FIG. 3, the distance B3 may specifically be 150mm, 155mm, 160mm, 165mm, 170mm, 175mm, 180mm, 185mm, 190mm, 195mm, 200mm, 205mm, 210mm, etc. Thus, a position of the inner end of the toe link 3 in a front-rear direction is defined, thus further improving the driving stability of the vehicle.

In some embodiments, a distance, denoted as C3, between the second inner point 31 and a plane where the X-axis and the Y-axis are located ranges from 80mm to 140mm. For example, as shown in FIG. 4, the distance C3 may be 80mm, 90mm, 100mm, 110mm, 120mm, 130mm, 140mm, etc. Thus, a position of the inner end of the toe link 3 in the up-down direction is defined, thus further improving the driving stability of the vehicle.

In some embodiments, an outer end of the toe link 3 configured to face an outer side of the vehicle forms a second outer point 32. For example, taking the toe link 3 at the right side as an example, the second outer point 32 may be a right end of the toe link 3.

A distance, denoted as A4, between the second outer point 32 and the X-axis along the direction of the Y-axis ranges from 740mm to 800mm. For example, as shown in FIG. 4, the distance A4 may specifically be 740mm, 750mm, 760mm, 780mm, 790mm, 800mm, etc. Thus, a position of the outer end of the toe link 3 in the left-right direction is defined, thus further improving the driving stability of the vehicle.

In some embodiments, a distance, denoted as B4, between the second outer point 32 and the Y-axis along the direction of the X-axis ranges from 100mm to 140mm. For example, as shown in FIG. 2, the distance B4 may specifically be 100mm, 105mm, 110mm, 115mm, 120mm, 125mm, 130mm, 135mm, 140mm, etc. Thus, a position of the outer end of the toe link 3 in the front-rear direction is defined, thus further improving the driving stability of the vehicle.

In some embodiments, a distance, denoted as C4, between the second outer point 32 and the plane where the X-axis and the Y-axis are located ranges from -20mm to 20mm. For example, as shown in FIG. 4, the distance C4 may specifically be -20mm, -10mm, 0mm, 10mm, 20mm, etc. Thus, a position of the outer end of the toe link 3 in the up-down direction is defined, thus further improving the driving stability of the vehicle.

A rear suspension system according to still another embodiment of the present disclosure is described below.

The rear suspension system according to the embodiment of the present disclosure includes a rear swing arm 1, an upper control arm 2, a toe link 3, and a lower control arm 4. The rear swing arm 1 extends along an X-axis of a vehicle. The upper control arm 2, the toe link 3, and the lower control arm 4 extend along a Y-axis of the vehicle, and along a direction of a Z-axis of the vehicle, the toe link 3 is located between the upper control arm 2 and the lower control arm 4.

The specific arrangement positions and orientations of the rear swing arm 1, the upper control arm 2, the toe link 3, and the lower control arm 4 may be as described in the above embodiments, which will not be repeated here.

An included angle, denoted as E3, formed between an extending direction of a projection of the lower control arm 4 in a vertical plane perpendicular to the Y-axis and the Z-axis ranges from 35° to 45°. For example, as shown in FIG. 2, the included angle E3 may specifically be 35°, 36°, 37°, 38°, 39°, 40°, 41°, 42°, 43°, 45°, etc. Thus, a spatial orientation of the lower control arm 4 in an up-down direction is defined, thus further improving the driving stability of the vehicle.

In some embodiments, an included angle, denoted as D3, formed between an extending direction of a projection of the lower control arm 4 in a horizontal plane and the Y-axis ranges from 4° to 12°. For example, as shown in FIG. 3, the included angle D3 may specifically be 4°, 5°, 6°, 7°, 8°, 9°, 10°, 11°, 12°, etc. Thus, a spatial orientation of the lower control arm 4 in a left-right direction is defined, thus further improving the driving stability of the vehicle.

In some embodiments, the X-axis, the Y-axis, and the Z-axis form a coordinate system, an origin of the coordinate system is located at a midpoint of a line connecting wheel centers of two rear wheels 9 of the vehicle, and an inner end of the lower control arm 4 configured to face an inner side of the vehicle forms a third inner point 41. For example, as shown in FIGS. 1 to 4, taking the lower control arm 4 at a right side as an example, the third inner point 41 may be a left end of the lower control arm 4.

A distance, denoted as A5, between the third inner point 41 and the X-axis along a direction of the Y-axis ranges from 80mm to 100mm. For example, as shown in FIG. 4, the distance A5 may specifically be 80mm, 82mm, 84mm, 86mm, 87mm, 88mm, 89mm, 90mm, 92mm, 95mm, 98mm, 99mm, 100mm, etc. Thus, a position of the inner end of the lower control arm 4 in the left-right direction is defined, thus further improving the driving stability of the vehicle.

In some embodiments, a distance, denoted as B5, between the third inner point 41 and the Y-axis along a direction of the X-axis ranges from 150mm to 190mm. For example, as shown in FIG. 2, the distance B5 may specifically be 150mm, 155mm, 160mm, 165mm, 170mm, 175mm, 180mm, 185mm, 190mm, etc. Thus, a position of the inner end of the lower control arm 4 in a front-rear direction is defined, thus further improving the driving stability of the vehicle.

In some embodiments, a distance, denoted as C5, between the third inner point 41 and a plane where the X-axis and the Y-axis are located ranges from -10mm to 15mm. For example, as shown in FIG. 4, the distance C5 may be -10mm, -5mm, 0mm, 5mm, 10mm, 15mm, etc. Thus, a position of the inner end of the lower control arm 4 in the up-down direction is defined, thus further improving the driving stability of the vehicle.

In some embodiments, an outer end of the lower control arm 4 configured to face an outer side of the vehicle forms a third outer point 42. For example, taking the lower control arm 4 at the right side as an example, the third outer point 42 may be a right end of the lower control arm 4.

A distance, denoted as A6, between the third outer point 42 and the X-axis along the direction of the Y-axis ranges from 750mm to 790mm. For example, as shown in FIG. 4, the distance A6 may specifically be 750mm, 760mm, 780mm, 790mm, etc. Thus, a position of the outer end of the lower control arm 4 in the left-right direction is defined, thus further improving the driving stability of the vehicle.

In some embodiments, a distance, denoted as B6, between the third outer point 42 and the Y-axis along the direction of the X-axis ranges from 50mm to 70mm. For example, as shown in FIG. 2, the distance B4 may specifically be 50mm, 55mm, 60mm, 65mm, 70mm, etc. Thus, a position of the outer end of the lower control arm 4 in the front-rear direction is defined, thus further improving the driving stability of the vehicle.

In some embodiments, a distance, denoted as C6, between the third outer point 42 and the plane where the X-axis and the Y-axis are located ranges from 100mm to 140mm. For example, as shown in FIG. 4, the distance C6 may specifically be 100mm, 115mm, 120mm, 125mm, 130mm, 135mm, 140mm, etc. Thus, a position of the outer end of the lower control arm 4 in the up-down direction is defined, thus further improving the driving stability of the vehicle.

A vehicle according to embodiments of the present disclosure is described below.

The vehicle according to the embodiments of the present disclosure may specifically be an all-terrain vehicle. The vehicle includes a rear suspension system, and the rear suspension system may be the rear suspension system as described in any of the above embodiments.

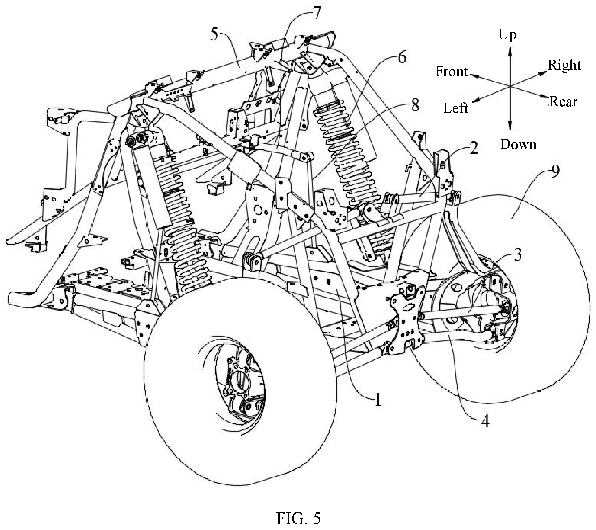

In some embodiments, as shown in FIG. 5, the vehicle further includes a frame 5, a damper 6, a stabilizer bar 7, a connecting rod 8, and a rear wheel 9. The upper control arm 2, the toe link 3, the lower control arm 4, and the damper 6 are each connected between the frame 5 and the rear swing arm 1. The stabilizer bar 7 is connected to the frame 5. The connecting rod 8 is connected between the stabilizer bar 7 and the rear swing arm 1. The rear swing arm 1 is connected to the rear wheel 9.

For example, the damper 6 generally extends in an up-down direction. An upper end of the damper 6 and a lower end of the damper 6 may be respectively connected to the frame 5 and the rear swing arm 1 via spherical bearings. Two ends of the upper control arm 2 may also be respectively connected to the frame 5 and the rear swing arm 1 via spherical bearings, two ends of the toe link 3 may also be respectively connected to the frame 5 and the rear swing arm 1 via spherical bearings, and two ends of the lower control arm 4 may also be respectively connected to the frame 5 and the rear swing arm 1 via spherical bearings. The stabilizer bar 7 may be arranged above the rear swing arm 1. A top end of the connecting rod 8 may be connected to a rear end of the stabilizer bar 7 via a spherical bearing, and a bottom end of the connecting rod 8 may be connected to the rear swing arm 1 via a spherical bearing. The rear swing arm 1 may be connected and fixed to the rear wheel 9 via a bolt.

In the description of the present disclosure, it should be understood that the orientation or position relationship indicated by terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present disclosure and simplifying the description, and does not indicate or imply that the referred device or element must have a specific orientation, and be constructed and operated in a specific orientation, so it cannot be understood as a limitation of the present disclosure.

In addition, terms "first" and "second" are only used for purpose of description, and cannot be understood as indicating or implying relative importance or implicitly indicating the number of indicated technical features. Therefore, the feature defined as the "first" or the "second" may explicitly or implicitly include at least one such feature. In the description of the present disclosure, "a plurality of" means at least two, such as two, three, etc., unless otherwise specifically defined.

In the present disclosure, unless otherwise expressly defined, terms such as "install/mount", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined.. For those skilled in the art, the specific meaning of the above terms in the present disclosure may be understood according to the specific situations.

In the present disclosure, unless otherwise expressly defined, a first feature "above", "on", or "on top of", "below", "under", "on bottom of" a second feature may include an embodiment in which the first feature is in direct contact with the second feature, or the first feature is in indirect contact with the second feature through an intermediate media. And, a first feature "above", "on", or "on top of" a second feature may include an embodiment in which the first feature is right or obliquely "above", "on", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the present specification, the description referring to terms such as "an embodiment", "some embodiments", "an example", "a specific example" or "some examples" means that a particular feature, structure, material, or characteristic described in connection with the embodiment or example is included in at least one embodiment or example of the present disclosure. In this specification, the illustrative expressions of the above terms do not necessarily refer to the same embodiment or example. Furthermore, the particular features, structures, materials, or characteristics may be combined in one or more embodiments or examples in any suitable manner. In addition, without contradiction, those skilled in the art may combine and unite different embodiments or examples or features of the different embodiments or examples described in this specification.

Although the embodiments of the present disclosure have been shown and described above, it may be understood that the above embodiments are illustrative and shall not be understood as limitation to the present disclosure, and changes, modifications, alternatives and variations may be made in the above embodiments within the scope of the present disclosure by those skilled in the art.

## Claims

1. A rear suspension system, comprising a rear swing arm, an upper control arm, a toe link, and a lower control arm, wherein the rear swing arm is configured to extend along an X-axis of a vehicle, the upper control arm, the toe link, and the lower control arm are configured to extend along a Y-axis of the vehicle, and, the toe link is configured to be located between the upper control arm and the lower control arm along a direction of a Z-axis of the vehicle, and
wherein an included angle, denoted as E, formed between an extending direction of a projection of the rear swing arm in a vertical plane perpendicular to the Y-axis and the X-axis ranges from -5° to 5°.

2. The rear suspension system according to claim 1, wherein an included angle, denoted as D, formed between an extending direction of a projection of the rear swing arm in a horizontal plane and the X-axis ranges from 4° to 10°.

3. The rear suspension system according to claim 1 or 2, wherein the X-axis, the Y-axis, and the Z-axis form a coordinate system, an origin of the coordinate system is located at a midpoint of a line connecting wheel centers of two rear wheels of the vehicle, and an end of the rear swing arm configured to face a front side of the vehicle forms a front point, wherein
a distance, denoted as A, between the front point and the X-axis along a direction of the Y-axis ranges from 400mm to 520mm; and/or
a distance, denoted as B, between the front point and the Y-axis along a direction of the X-axis ranges from 1100mm to 1200mm; and/or
a distance, denoted as C, between the front point and a plane where the X-axis and the Y-axis are located ranges from -30mm to 70mm.

4. A rear suspension system, comprising a rear swing arm, an upper control arm, a toe link, and a lower control arm, wherein the rear swing arm is configured to extend along an X-axis of a vehicle, the upper control arm, the toe link, and the lower control arm are configured to extend along a Y-axis of the vehicle, and the toe link is configured to be located between the upper control arm and the lower control arm along a direction of a Z-axis of the vehicle, and
wherein an included angle, denoted as E1, formed between an extending direction of a projection of the upper control arm in a vertical plane perpendicular to the Y-axis and the Z-axis ranges from 40° to 50°.

5. The rear suspension system according to claim 4, wherein an included angle, denoted as D1, formed between an extending direction of a projection of the upper control arm in a horizontal plane and the Y-axis ranges from 8° to 16°.

6. The rear suspension system according to claim 4 or 5, wherein the X-axis, the Y-axis, and the Z-axis form a coordinate system, an origin of the coordinate system is located at a midpoint of a line connecting wheel centers of two rear wheels of the vehicle, and an end of the upper control arm configured to face an inner side of the vehicle forms a first inner point, wherein
a distance, denoted as A1, between the first inner point and the X-axis along a direction of the Y-axis ranges from 50mm to 70mm; and/or
a distance, denoted as B1, between the first inner point and the Y-axis along a direction of the direction of the X-axis ranges from -30mm to 30mm; and/or
a distance, denoted as C1, between the first inner point and a plane where the X-axis and the Y-axis are located ranges from 500mm to 600mm.

7. The rear suspension system according to claim 6, wherein an end of the upper control arm configured to face an outer side of the vehicle forms a first outer point,
wherein a distance, denoted as A2, between the first outer point and the X-axis along the direction of the Y-axis ranges from 650mm to 700mm; and/or
a distance, denoted as B2, between the first outer point and the Y-axis along the direction of the X-axis ranges from 80mm to 140mm; and/or
a distance, denoted as C2, between the first outer point and the plane where the X-axis and the Y-axis are located ranges from 400mm to 460mm.

8. A rear suspension system, comprising a rear swing arm, an upper control arm, a toe link, and a lower control arm, wherein the rear swing arm is configured to extend along an X-axis of a vehicle, the upper control arm, the toe link, and the lower control arm are configured to extend along a Y-axis of the vehicle, and the toe link is located between the upper control arm and the lower control arm along a direction of a Z-axis of the vehicle, and
wherein an included angle, denoted as E2, formed between an extending direction of a projection of the toe link in a vertical plane perpendicular to the Y-axis and the Z-axis ranges from 20° to 30°.

9. The rear suspension system according to claim 8, wherein an included angle, denoted as D2, formed between an extending direction of a projection of the toe link in a horizontal plane and the Y-axis ranges from 0° to 8°.

10. The rear suspension system according to claim 8 or 9, wherein the X-axis, the Y-axis, and the Z-axis form a coordinate system, an origin of the coordinate system is located at a midpoint of a line connecting wheel centers of two rear wheels of the vehicle, and an end of the toe link configured to face an inner side of the vehicle forms a second inner point, wherein
a distance, denoted as A3, between the second inner point and the X-axis along a direction of the Y-axis ranges from 30mm to 50mm; and/or
a distance, denoted as B3, between the second inner point and the Y-axis along a direction of the X-axis ranges from 150mm to 210mm; and/or
a distance, denoted as C3, between the second inner point and a plane where the X-axis and the Y-axis are located ranges from 80mm to 140mm;
wherein an end of the toe link configured to face an outer side of the vehicle forms a second outer point, wherein
a distance, denoted as A4, between the second outer point and the X-axis along the direction of the Y-axis ranges from 740mm to 800mm; and/or
a distance, denoted as B4, between the second outer point and the Y-axis along the direction of the X-axis ranges from 100mm to 140mm; and/or
a distance, denoted as C4, between the second outer point and the plane where the X-axis and the Y-axis are located ranges from -20mm to 20mm.

11. A rear suspension system, comprising a rear swing arm, an upper control arm, a toe link, and a lower control arm, wherein the rear swing arm is configured to extend along an X-axis of a vehicle, the upper control arm, the toe link, and the lower control arm are configured to extend along a Y-axis of the vehicle, and the toe link is is configured to be located between the upper control arm and the lower control arm along a direction of a Z-axis of the vehicle,
wherein an included angle, denoted as E3, formed between an extending direction of a projection of the lower control arm in a vertical plane perpendicular to the Y-axis and the Z-axis ranges from 35° to 45°.

12. The rear suspension system according to claim 11, wherein an included angle, denoted as D3, formed between an extending direction of a projection of the lower control arm in a horizontal plane and the Y-axis ranges from 4° to 12°.

13. The rear suspension system according to claim 11 or 12, wherein the X-axis, the Y-axis, and the Z-axis form a coordinate system, an origin of the coordinate system is located at a midpoint of a line connecting wheel centers of two rear wheels of the vehicle, and an end of the lower control arm configured to face an inner side of the vehicle forms a third inner point, wherein
a distance, denoted as A5, between the third inner point and the X-axis along a direction of the Y-axis ranges from 80mm to 100mm; and/or
a distance, denoted as B5, between the third inner point and the Y-axis along a direction of the X-axis ranges from 150mm to 190mm; and/or
a distance, denoted as C5, between the third inner point and a plane where the X-axis and the Y-axis are located ranges from -10mm to 15mm;
wherein an end of the lower control arm configured to face an outer side of the vehicle forms a third outer point, wherein
a distance, denoted as A6, between the third outer point and the X-axis along the direction of the Y-axis ranges from 750mm to 790mm; and/or
a distance, denoted as B6, between the third outer point and the Y-axis along the direction of the X-axis ranges from 50mm to 70mm; and/or
a distance, denoted as C6, between the third outer point and the plane where the X-axis and the Y-axis are located ranges from 100mm to 140mm.

14. A vehicle, comprising the rear suspension system according to any one of claims 1 to 13.

15. The vehicle according to claim 14, further comprising:
a frame and a damper, wherein the upper control arm, the toe link, the lower control arm, and the damper are each connected between the frame and the rear swing arm;
a stabilizer bar and a connecting rod, wherein the stabilizer bar is connected to the frame, and the connecting rod is connected between the stabilizer bar and the rear swing arm; and
a rear wheel, wherein the rear swing arm is connected to the rear wheel.
